# EUROPEAN PATENT SPECIFICATION

(11) **EP 3 442 386 B1**
(45) Date of publication and mention of the grant of the patent: **05.02.2020**
(21) Application number: 17713035.8
(22) Date of filing: 29.03.2017
(51) Int. Cl.: A47J 37/12, A23L 5/10, A23L 19/18, A23B 7/03

(54) **APPLIANCE AND METHOD FOR COOKING POTATO CHIPS**
VORRICHTUNG UND VERFAHREN ZUM GAREN VON KARTOFFELCHIPS
APPAREIL ET PROCÉDÉ DE CUISSON DES FRITES

(30) Priority: 11.04.2016 WO PCT/CN2016/078995; 17.08.2016 EP 16184587
(43) Date of publication of application: 20.02.2019
(73) Proprietor: Koninklijke Philips N.V., 5656 AE Eindhoven (NL)
(72) Inventor: SUN, Wen, 5656 AE Eindhoven (NL); CHEN, Yun, 5656 AE Eindhoven (NL)
(74) Representative: Freeke, Arnold
(86) International application number: PCT/EP2017/057348
(87) International publication number: WO 2017/178229

(56) References cited:
- WO-A1-96/22047
- US-A- 4 203 358
- US-A- 5 279 840
- US-A1- 2008 138 479

## Description

### FIELD OF THE INVENTION

This invention relates to an appliance and method for cooking potato chips. In particular, it relates to an appliance and method suitable for fresh (non-frozen) potato chips and based on a low fat air frying approach.

### BACKGROUND OF THE INVENTION

Chips (otherwise known as fries) are a very popular food item all over the world. Generally, chips are desired to have a particular texture, of a soft inside and a crispy outside.

Conventionally, chips are cooked by deep fat frying with a large amount of cooking oil, and at a high temperature setting. Deep fat fried chips are either made from fresh-cut potatoes or from commercially packaged frozen chips.

Deep fat frying is not desired by consumers who have concerns relating to their intake of unhealthy fats. A known alternative way to make chips at home with a lower fat content is to use a so-called air fryer. This cooks the chips using a rapid flow of hot air to heat the chips and it allows the user to reduce the amount of oil used significantly.

The air frying method works very well on commercially frozen chips, which are for example par-fried as part of a mass manufacturing process and then frozen for sale. The air frying approach means the chips may have up to 80% less fat content than deep fat fried chips, with no compromise on the desired sensory quality.

Consumers still have concerns about the mass manufacturing processes used to form the frozen chips. They would prefer to buy natural and fresh ingredients instead of processed food items. There is thus a need for a system which can make good quality chips in the home, without deep fat frying, and from fresh (i.e. whole, and non-frozen) potatoes. Air frying may be used to cook fresh potato chips. However, for some consumers, the texture is good enough.

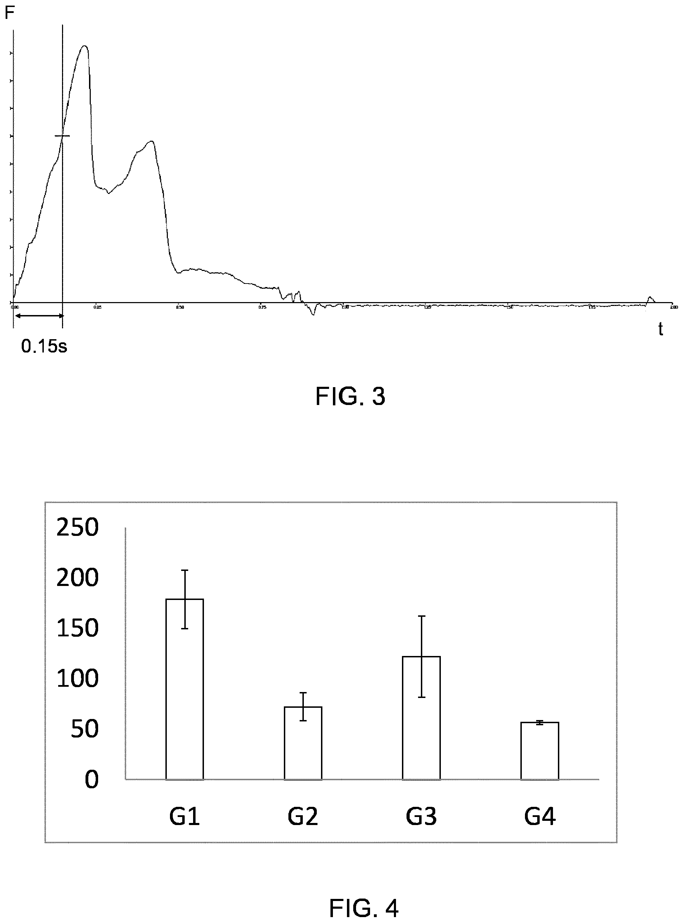

Experiments have been conducted using a professional texture analyzer, and a textural parameter which corresponds to crispiness was determined for air fried fresh-cut chips and for air fried frozen chips. As shown in Fig. 4, the physical parameter chosen to represent crispness of frozen chips is around 2.5 larger than for fresh-cut chips prepared with the same cooking appliance.

WO 96/22047 discloses a method for the fat-free cooking of food products generally intended for frying, comprising a first step wherein the food products are cooked by microwaves or with steam or with a mixture of steam and air at a temperature of 95-150 °C, and a second step wherein said products are cocked by means of a dry air stream at a temperature of 200-400 °C. WO 96/22047 also discloses an apparatus for fat-free cooking of food-products intended for frying, comprising: a cooking enclosure containing a support device for the food product; an air circulating or pulsating device; a device for heating the cooking enclosure and/or the air entering the cooking enclosure; and means for producing steam and directing it to the cooking enclosure, as well as means for alternately selecting steam cooking and hot air cooking.

US 2008/138479A1 discloses a method for producing vegetable products from blanched vegetables, comprising: par frying the blanched vegetables at a par frying temperature and next applying heat and humidity for drying the vegetables.

### SUMMARY OF THE INVENTION

There is therefore a need for a cooking appliance and method which is suitable for cooking chips from fresh-cut (non-frozen) raw potatoes, which is based on air frying to reduce the fat content, but which delivers a good enough quality texture.

The invention is defined by the claims.

According to examples in accordance with an aspect of the invention, there is provided a cooking appliance for cooking potato chips, comprising:
a chamber for receiving raw potato chips;
a humidity control system;
an air flow generation system;
a heating system; and
a controller for controlling the humidity control system, the air flow generation system, and the heating system,
wherein the controller is adapted to implement a cooking process which comprises:
   a cooking cycle at a first temperature in a first temperature range which is above 100 degrees Celsius and in a cooking environment at a first controlled humidity such that the potatoes are cooked through to their centers;
   a dehydration process at a second temperature in a second temperature range, wherein the dehydration process is carried out in air at a second humidity below the first controlled humidity with an air flow; and
   a browning process at a third temperature in a third temperature range, wherein the third temperature is higher than the first and second temperatures, wherein the browning process is carried out in air at a third humidity also below the first controlled humidity and with an air flow.

The cooking method implemented by the appliance has three steps. The first step is used to cook the potato centers so that the whole potato is fully cooked (i.e. edible), and it may comprise steaming, i.e. with a high humidity. This step cooks the chips to an edible state but without any browning on the chip surface. Thus, the first cooking step is not only a partial pre-cooking stage, but is the stage used to ensure the potato is cooked fully through. This is quite different from the use of frozen fries. In this case, there is a partial cooking process in a factory, and the final cooking takes place in the home using deep frying or air frying.

The second step is used to air dry (dehydrate) the chips at low humidity and preferably to provide a thin layer of crust formation. This takes place before then browning the chips in the third step at a higher temperature and again a low humidity. This method thus comprises a combination of steaming and air frying, and it may be used to make chips from raw non-frozen fresh potatoes based on a low-fat air frying approach. It enables an improved texture of the chip surface, in particular a crisp texture, compared to conventional air frying of fresh potatoes while maintaining the low fat advantage of cooking in air rather than in oil.

The controller may be adapted to implement the cooking cycle as steam cooking in the first temperature range of 100 to 130 degrees Celsius, for example 110 to 130 degrees Celsius.

Thus, the relative humidity is near 100% during the first step. If full steam cooking is used, the latent heat will speed up the process and also make sure there is homogeneity. A low temperature below 130 degrees Celsius avoids overcooking especially on the surface. Meanwhile, if the temperature is also above 110 degrees Celsius, this ensures less condensation of water on the surface of the chips.

The controller may be adapted to implement a cooking cycle of at least 6 minutes.

As mentioned above, the cooking is sufficient for the inside of the chips to be fully cooked and hence edible, and is the main step responsible for cooking the inside of the chips to a full gelatinization status (i.e. well-done food doneness level). The other steps are primarily concerned with forming surface crispiness and color (i.e. performing a Maillard reaction).

The controller may be adapted to implement the dehydration process in the second temperature range of 120 to 140 degrees Celsius. This may for example result in a relative humidity in the range 0% to 5%.

The dehydration process may for example use a convection fan to blow air over the chips with the desired low humidity. The relative humidity may be below 2%. The result of the dehydration process is for example to provide a weight loss of around 50%.

The controller may be adapted to implement the browning process in the third temperature range of 160 to 200 degrees Celsius. This may also result in a relative humidity in the range 0% to 5%.

This is the highest temperature part of the process, for browning and crisping the outer surface of the chips. The browning process again uses a fan to blow air over the chips with the desired low humidity. This is similar to a standard air frying process, but the chips have already been cooked in their centers and dried. The resulting relative humidity may be below 2%.

The controller may be adapted to generate the air flow with an air circulation speed in the range 3 to 8.5 m/s.

The controller may be adapted to apply the dehydration process for 10 to 25 minutes and the browning process for 5 to 10 minutes.

The humidity control system for example comprises a humidity sensor, a water tank and a water heater. This functions as a steam generator. The air flow generation system for example comprises a convection fan.

The invention also provides a method of cooking potato chips, comprising:
cooking raw potato chips at a first temperature in a first temperature range which is above 100 degrees Celsius and in a cooking environment at a first controlled humidity such that the potatoes are cooked through to their centers;
performing a dehydration process at a second temperature in a second temperature range, and the dehydration process is carried out in air at a second humidity below the first controlled humidity and with an air flow; and
browning the chips at a third temperature in a third temperature range, wherein the third temperature is higher than the first and second temperatures, and the browning process is carried out in air at a third humidity also below the first controlled humidity and with an air flow.

This is the method defined above as used by the cooking appliance of the invention. The first step is used to cook the potato centers so that the whole potato is fully cooked. There is then air drying of the chips followed by browning. The method gives an improved texture of the chip surface, in particular crisp texture, compared to conventional air frying of raw fresh potatoes.

The cooking preferably comprises steam cooking.

As explained above, the first temperature range may be 100 to 130 degrees Celsius, for example 110 to 130 degrees Celsius;
the second temperature range may be 120 to 140 degrees Celsius, and this may give rise to a second humidity which is a relative humidity in the range 0% to 5%; and
the third temperature range may be 160 to 200 degrees Celsius, and this may give rise to a third humidity which is a relative humidity in the range 0% to 5%.

The air flow for example generates an air circulation speed in the range 3 to 8.5 m/s, for example 5 to 8.5m/s for the dehydration process and 7 to 8.5m/s for the browning process.

The cooking (for at least 6 minutes), dehydration (for 10 to 25 minutes) and browning (for 5 to 10 minutes) stages preferably follow in sequence with no delay between the stages.

Thus, the method is a single process for progressing from raw fresh potato chips to fully cooked chips. The method is preferably implemented by a single appliance which has the required temperature and humidity control, including steam generation.

### BRIEF DESCRIPTION OF THE DRAWINGS

Examples of the invention will now be described in detail with reference to the accompanying drawings, in which:
Fig. 1 shows a cooking appliance for cooking chips; and
Fig. 2 shows a cooking method.
Fig. 3 shows a force - time graph for a compression test used to measure crispiness; and
Fig. 4 shows the results of a series of experiments.

### DETAILED DESCRIPTION OF THE EMBODIMENTS

The invention provides a cooking appliance and method for cooking potato chips. The appliance has a humidity control system, an air flow generation system and a heating system. The cooking process has a relatively low temperature and high humidity cooking cycle, a low humidity dehydration process and a relatively high temperature low humidity browning process. These three cycles enable good crisp crust formation for fresh non-frozen chips which are cooked using an air/steam based cooking process rather than a deep fat frying process.

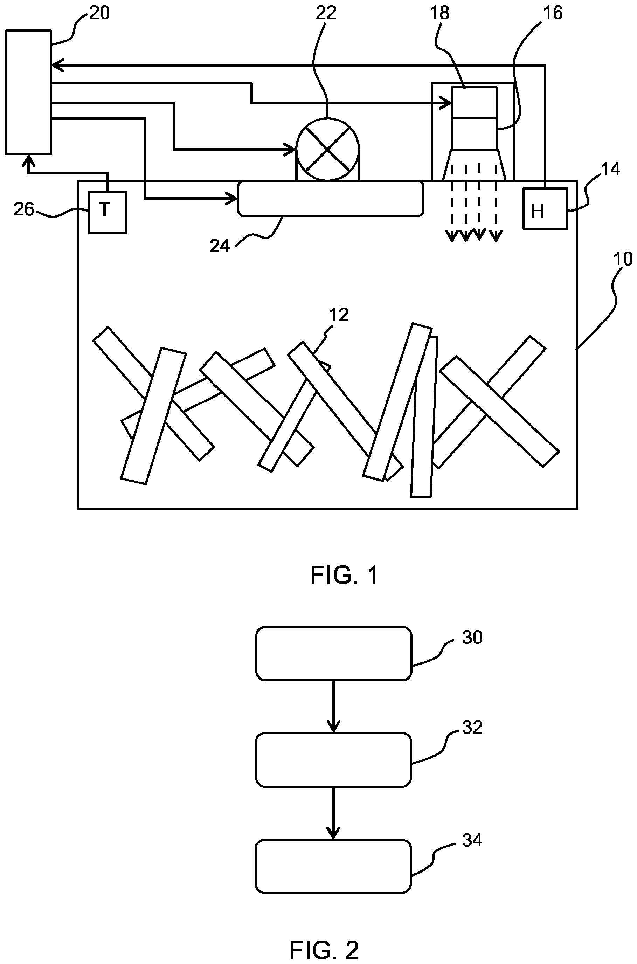

Fig. 1 shows a cooking appliance for cooking chips.

The appliance comprises a chamber 10 for receiving raw potato chips 12. The chamber has a closed lid so that the cooking environment inside the chamber can be controlled, in particular, the temperature and relative humidity. Air flow in the chamber over the chips is also controlled.

The appliance has a humidity control system, which comprises a humidity sensor 14, a water tank 16 and a water heater 18 for generating steam from the water in the water tank 16. A controller 20 implements the humidity control. It receives the humidity sensor information and implements control of the heater 18. There may be separate heating of the water to generate steam at 100 degrees Celsius, and then steam heating if desired to raise the steam temperature above 100 degrees Celsius.

An air flow generation system is also provided, comprising a convection fan 22 for generating an air flow around the chips.

There is also an air heater 24 for heating the air in the chamber, and a temperature sensor 26. The air heater 24 and water heater 18 may together be considered to form a heating system.

There may be a separate temperature sensor for monitoring the steam temperature, and provided at the location of the humidity sensor 14, or else a single temperature sensor may be used for monitoring the chamber air and steam temperatures.

The temperature sensor 26 provides its output to the controller 20 which controls the air heater 24. The controller 20 also controls the operation of the fan 22 and is thus an overall system controller. The controller implements control of the air/steam temperature, humidity and air/steam flow in the chamber 10.

The controller implements a three stage cooking process.

The first stage is a cooking cycle at a temperature in a first temperature range which is above 100 degrees Celsius and in a cooking environment at a first controlled humidity such that the potatoes are cooked through to their centers. In other words, the chips are fully cooked to fully cook (i.e. to full gelatinization). In this way, the chips are cooked up to an edible status. Potato chips are starch-based foods so that during heating starch granule gelatinization will occur, and accompanying this physicochemical reaction, the chips will become edible and soft inside.

The cooking temperature range is for example 100 to 130 degrees Celsius. The temperature may be at least 110 degrees Celsius, for example 110 to 130 degrees Celsius. If the temperature is above 110 degrees Celsius, this ensures less condensation of water on the surface of the chips. A temperature at or below 130 degrees Celsius avoids overcooking.

The relationship between starch gelatinization and temperature is known, for example as shown in the table below:

| **Temperature** | **Status of starch gelatinization** | | | | |
|---|---|---|---|---|---|
| | 1min | 3min | 5min | 7min | 9min |
| **40 °C** | Not started yet | | | | |
| **55 °C** | | | | | |
| **65 °C** | 40∼50% gelatinization | | | | |
| **75 °C** | | 80∼90% gelatinization | | | |
| **85 °C** | ∼90% gelatinization | | | | |

A temperature of 100 degrees or slightly superheated steam (110 to 130 degrees Celsius) is chosen to ensure rapid and full gelatinization. Even at 130 degrees Celsius, the potato has still been steamed (and not baked), but with less condensation water on the surface, and with a shorter cooking cycle.

Cooking with steam at 100 degrees Celsius will cause condensation water on the surface of the chips which may affect the final quality, so that 110 to 130 degrees Celsius is preferred to deliver a steam cooking without compromising the texture.

The first controlled humidity corresponds to steam cooking, so may be a relative humidity at or near 100%. The latent heat speeds up the cooking process and avoids overcooking, especially on the surface. The cooking process duration depends on the quantity of chips, but typically takes 4 to 10 minutes, and more likely at least 6 minutes.

Thus, the first cooking step is not only a partial pre-cooking stage, but is the stage used to ensure the potato is cooked fully through.

The second stage is a dehydration process at a second temperature in a second temperature range, and in air at a second controlled humidity below the first controlled humidity. This second stage is used to air dry (dehydrate) the chips at low humidity and to provide a thin layer of crust formation. This stage ensures there is a crisp outside, combined with the soft inside. This stage involves air heating and convection.

The dehydration process is in a temperature range of 120 to 140 degrees Celsius with a relative humidity in the range 0% to 5%. The relative humidity may be below 2%. The result of the dehydration process is for example to provide a weight loss of around 50%.

The main purpose is to dehydrate the surface water and also to provide a gentle surface crust and separation of the surface from the inside. In this stage, the formation of a tough surface is not required, which may have a negative impact on the crispness formation in the later phase. Hence, the upper limit temperature is 140 degrees Celsius. A higher temperature provides browning and toughening which is not yet intended at this stage of the process.

In order to reduce the relative humidity, an outlet and a fan are provided. When de-humidification is needed, a negative pressure is produced surrounding the outlet, so that powered air convection is used to draw inside humidity out of the chamber. The high temperature air gives a reduction in relative humidity.

The fan 22 (or multiple fans) enables the surface of the chips to be dried homogenously. There may be fans inside the chamber or mounted at the outer wall of the chamber. The air flow during the dehydration process for example has a speed in the range 3m/s to 8.5m/s, for example 5m/s to 8.5m/s.

The duration of the second stage may be in the range 10 to 25 minutes, depending on the quantity of chips being cooked.

The third stage is a browning process at a third temperature in a third temperature range, wherein the third temperature is higher than the first and second temperatures, and in air at a third controlled humidity also below the first controlled humidity.

This browning is at a higher temperature and again a low humidity. This stage also involves air heating and convection.

The third temperature range is for example 160 to 200 degrees Celsius with a relative humidity in the range 0% to 5%. The relative humidity may again be below 2%.

The purpose is to deliver a browning effect at a high temperature and low-humidity condition. This is based on the Maillard reaction, which forms a browned surface and desirable aroma. Meanwhile, at such higher temperatures, due to water loss from the interior to the exterior, the porous structure of the surface will form a crispy texture. The temperature is preferably limited to below 200 degrees Celsius because above 200 degrees Celsius, some harmful compounds may be produced and undesirable charring areas may be formed.

The duration of the third stage may typically be in the range 5 to 10 minutes, although longer durations are possible depending on the quantity of chips being cooked.

This is the highest temperature part of the process, for browning and crisping the outer surface of the chips. This is similar to a standard air frying process, but the chips have already been cooked through to their centers and dried. The air flow during the browning stage for example has a speed in the range 3m/s to 8.5m/s, for example 5m/s to 8.5m/s, but most preferably 7m/s to 8.5m/s. Thus, high air speed is desired in this stage.

A small quantity of oil may be added either at the outset, or before third stage, to improve the flavor. For example, 5 to 10 grams of oil may be added per 600 grams of chips.

The potatoes may preferably be soaked in water and then manually dried (e.g. dabbing using kitchen paper) before cooking.

The appliance preferably conducts the cooking process as a continuous process, with no gaps between the stages. However, the cooking process may be interrupted by the user, for example to add seasoning or other additional flavoring during the cooking process. The user may also dry the chips manually between the cooking and dehydration process. In general, the cooking process is intended to be a continuous process.

Fig. 2 shows the method.

It comprises the cooking stage 30, the dehydration stage 32 and the browning stage 34 all as described above.

The results of the cooking process have been analyzed by experiment. The experiment involved the cooking of fresh potatoes and commercial frozen chips by different cooking methods, and then the results were compared.

An air fryer, deep-fat fryer and steamer were used for the different cooking processes, and a texture analyzer was used for analysis of the "crispiness".

The procedure for cooking fresh potatoes was as follows:
1. Cut the fresh potatoes into strips of 1 cm thickness using a professional potato cutter;
2. Immediately, soak the potato slices with tap water for 30 minutes;
3. Absorb surface water of the potato strips with kitchen tissue gently. The potato strips were then weighed and the weight recorded.
4. The potato strips were then cooked, with the conventional air fryer, convention deep-fat fryer, and using the proposed cooking method.

After the cooking, the weight loss experienced during cooking was also determined and the texture of the chips was measured.

Four groups of texture results were obtained.

The first result is for a control group G1. For this group, the air fryer was heated to 200 degrees Celsius, then around 300 grams of frozen chips were placed into the chamber. The cooking duration was 9 minutes (this is a short cooking time because the chips are partially pre-cooked industrially). The cooked fries were then removed and weighed so that the weight loss could be calculated. The texture was then also measured.

A second group G2 was based on the default recipe of the air fryer used, as applied to home-made fresh fries. This involved pre-heating the air fryer to 160 degrees Celsius, then putting 300 grams of fresh potato chips into the chamber for 10 minutes. The drawer was then taken out quickly, and the part cooked chips were flipped for 10 seconds. Meanwhile, the temperature was adjusted to 180 degrees Celsius. Cooking then continued for another 4 minutes, then the chips were tossed again for 10 seconds. The chips were further cooked for 4 more minutes. The cooking was then stopped and the cooked chips were weighed. The weight loss was then calculated and the texture was measured.

A third group G3 was carried out using the method explained above. This is a three stage cooking method, and it was applied to home-made fresh chips. First, the potato strips were steamed to full gelatinization status (i.e. well done from the sensory perception) at 100 degrees Celsius for 5 minutes. The surface water was then absorbed with kitchen tissue.

The pre-cooked fries were then loaded into the air fryer pre-heated to 120 degrees Celsius for 25 minutes. The temperature was then adjusted to 180 degrees Celsius for another 8 minutes. The cooked fries were then removed and weighed so that the weight loss could be calculated. The texture was then also measured.

A fourth group G4 was carried out using deep-frying. The fryer was preheated to 180 degrees Celsius, then the fresh potato strips were put into the cooking oil for 11 minutes. Cooking was then stopped and the surface oil absorbed before weighing to calculate the weight loss and then measuring the texture.

The texture measurement involved recording the force during compression with an automatic compression cycle.

Fig. 3 shows a typical force-time profile recorded during a compression cycle, in which the first 0.15 seconds are of interest. A metric indicative of the crispiness level can be derived from the linear distance of the force-time curve. This linear distance represents the length of an imaginary line joining all sampling points in the selected region (between 0s and 0.15s in this example).

The texture test was carried out immediately after cooking, because the surface of the chips quickly becomes soft and watery. One sample of the batch of chips was chosen and the sample was put vertically under a testing probe. One point only was compressed for each sample tested.

The measurement was completed when the test probe returned to its start position and the parameter representing crispness was then recorded. The measurements were repeated for nine further samples from each batch.

For every cooking method group, 3 cooking repetitions (i.e. batches) were conducted. The final weight loss (%) and crispness (g^{∗}sec) shown in the below table is the average of the 3 experiments.

| Group | Food ingredients | Weight loss (%) | Crispness (g^{∗}sec) |
|---|---|---|---|
| G1 | Frozen chips | 45.5±0.79 | 178.7±29.1 |
| G2 | Home-made chips | 62.6±2.38 | 72±13.9 |
| G3 | Home-made chips | 67.6±1.94 | 121.7±40.4 |
| G4 | Home-made chips | 61.6±0.47 | 56.4±1.8 |

The crispiness results are also shown in Fig. 4, which plots the crispiness measure for each group and shows the variation in results using error bars.

It can be seen from the table above and Fig. 4 that the method outlined above achieves the best crispiness results for the cooking of fresh home-made chips, and approaching the crispiness of air fried frozen chips. It also provides the greatest weight loss.

The appliance and method has been described for potato chip cooking. However, the appliance may be used for other food items. For example it may be used for parsnip chips.

The appliance may also have other cooking modes, so that it can for example be used as a steamer, or as a conventional air fryer. Thus, the operating mode described above may be one operation mode of a multi-mode cooking appliance.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

Any reference signs in the claims should not be construed as limiting the scope.

## Claims

1. A cooking appliance for cooking potato chips, comprising:
a chamber (10) for receiving raw potato chips;
a humidity control system;
an air flow generation system (22);
a heating system (18,24); and
a controller (20) for controlling the humidity control system, the air flow generation system, and the heating system,
wherein the controller is adapted to implement a cooking process which comprises:
a cooking cycle at a first temperature in a first temperature range which is above 100 degrees Celsius and in a cooking environment at a first controlled humidity such that the potatoes are cooked through to their centers;
a dehydration process at a second temperature in a second temperature range, wherein the dehydration process is carried out in air at a second humidity below the first controlled humidity with an air flow; and
a browning process at a third temperature in a third temperature range, wherein the third temperature is higher than the first and second temperatures, wherein the browning process is carried out in air at a third humidity also below the first controlled humidity and with an air flow.

2. An appliance as claimed in claim 1, wherein the controller (20) is adapted to implement the cooking cycle as steam cooking in the first temperature range of 100 to 130 degrees Celsius.

3. An appliance as claimed in claim 2, wherein the first temperature range is 110 to 130 degrees Celsius.

4. An appliance as claimed in claim 1, wherein the controller (20) is adapted to implement the dehydration process in the second temperature range of 120 to 140 degrees Celsius and with an air flow speed in the range of 5-8.5 m/s.

5. An appliance as claimed in claim 1, wherein the controller (20) is adapted to implement the browning process in the third temperature range of 160 to 200 degrees Celsius and with an air flow speed in the range of 7-8.5 m/s.

6. An appliance as claimed in claim 1, wherein the controller (20) is adapted to apply the dehydration process for 10 to 25 minutes.

7. An appliance as claimed in claim 1, wherein the controller (20) is adapted to apply the browning process for 5 to 10 minutes.

8. An appliance as claimed in claim 1, wherein the humidity control system comprises a humidity sensor (14), a water tank (16) and a water heater (18), and the air flow generation system comprises a convection fan (22).

9. A method of cooking potato chips, comprising:
cooking raw potato chips at a first temperature in a first temperature range which is above 100 degrees Celsius and in a cooking environment at a first controlled humidity such that the potatoes are cooked through to their centers;
performing a dehydration process at a second temperature in a second temperature range, and the dehydration process is carried out in air at a second humidity below the first controlled humidity and with an air flow; and
browning the chips at a third temperature in a third temperature range, wherein the third temperature is higher than the first and second temperatures, and the browning process is carried out in air at a third humidity also below the first controlled humidity and with an air flow.

10. A method as claimed in claim 9, wherein the cooking comprises steam cooking.

11. A method as claimed in claim 9, wherein:
the first temperature range is 100 to 130 degrees Celsius.

12. A method as claimed in claim 9, wherein:
the second temperature range is 120 to 140 degrees Celsius, with an air flow speed in the range of 5-8.5 m/s.

13. A method as claimed in claim 9, wherein:
the third temperature range is 160 to 200 degrees Celsius, with an air flow speed in the range of 7-8.5 m/s.

14. A method as claimed in claim 9, wherein the cooking is for at least 6 minutes, the dehydration process is for 10 to 25 minutes and the browning process is for 5 to 10 minutes.

15. A method as claimed in claim 9, wherein the cooking, dehydration and browning stages follow in sequence with no delay between the stages.

## Patentansprüche

1. Garvorrichtung zum Garen von Pommes frites, umfassend:
eine Kammer (10) zum Aufnehmen von rohen Pommes frites;
ein Feuchtigkeitssteuerungssystem;
ein Luftstromerzeugungssystem (22);
ein Heizsystem (18, 24); und
eine Steuerung (20) zum Steuern des Feuchtigkeitssteuerungssystem, des Luftstromerzeugungssystems und des Heizsystems,
wobei die Steuerung dazu geeignet ist, einen Garprozess zu implementieren, der umfasst:
einen Garzyklus bei einer ersten Temperatur in einem ersten Temperaturbereich, der über 100 Grad Celsius liegt, und in einer Garumgebung bei einer ersten gesteuerten Feuchtigkeit derart, dass die Kartoffeln bis zu ihrer Mitte durchgegart werden;
einen Dehydratisierungsprozess bei einer zweiten Temperatur in einem zweiten Temperaturbereich, wobei der Dehydratisierungsprozess an Luft bei einer zweiten Feuchtigkeit unterhalb der ersten gesteuerten Feuchtigkeit mit einem Luftstrom ausgeführt wird; und
einen Bräunungsprozess bei einer dritten Temperatur in einem dritten Temperaturbereich, wobei die dritte Temperatur höher ist als die erste und zweite Temperatur, wobei der Bräunungsprozess an Luft bei einer dritten Feuchtigkeit ebenfalls unterhalb der ersten gesteuerten Feuchtigkeit und mit einem Luftstrom ausgeführt wird.

2. Vorrichtung nach Anspruch 1, wobei die Steuerung (20) dazu geeignet ist, den Garzyklus als Dampfgaren im ersten Temperaturbereich von 100 bis 130 Grad Celsius zu implementieren.

3. Vorrichtung nach Anspruch 2, wobei der erste Temperaturbereich 110 bis 130 Grad Celsius beträgt.

4. Vorrichtung nach Anspruch 1, wobei die Steuerung (20) dazu geeignet ist, den Dehydratisierungsprozess im zweiten Temperaturbereich von 120 bis 140 Grad Celsius und mit einer Luftstromgeschwindigkeit im Bereich von 5-8,5 m/s zu implementieren.

5. Vorrichtung nach Anspruch 1, wobei die Steuerung (20) dazu geeignet ist, den Bräunungsprozess im dritten Temperaturbereich von 160 bis 200 Grad Celsius und mit einer Luftstromgeschwindigkeit im Bereich von 7-8,5 m/s zu implementieren.

6. Vorrichtung nach Anspruch 1, wobei die Steuerung (20) dazu geeignet ist, den Dehydratisierungsprozess 10 bis 25 Minuten lang anzuwenden.

7. Vorrichtung nach Anspruch 1, wobei die Steuerung (20) dazu geeignet ist, den Bräunungsprozess 5 bis 10 Minuten lang anzuwenden.

8. Vorrichtung nach Anspruch 1, wobei das Feuchtigkeitssteuerungssystem einen Feuchtigkeitssensor (14), einen Wassertank (16) und einen Wassererhitzer (18) umfasst, und das Luftstromerzeugungssystem einen Konvektionslüfter (22) umfasst.

9. Verfahren zum Garen von Pommes frites, umfassend:
Garen von rohen Pommes frites bei einer ersten Temperatur in einem ersten Temperaturbereich, der über 100 Grad Celsius liegt, und in einer Garumgebung bei einer ersten gesteuerten Feuchtigkeit derart, dass die Kartoffeln bis zu ihrer Mitte durchgegart werden;
Durchführen eines Dehydratisierungsprozesses bei einer zweiten Temperatur in einem zweiten Temperaturbereich, und der Dehydratisierungsprozess an Luft bei einer zweiten Feuchtigkeit unterhalb der ersten gesteuerten Feuchtigkeit und mit einem Luftstrom ausgeführt wird; und
Bräunen der Pommes frites bei einer dritten Temperatur in einem dritten Temperaturbereich, wobei die dritte Temperatur höher ist als die erste und zweite Temperatur, und der Bräunungsprozess an Luft bei einer dritten Feuchtigkeit ebenfalls unterhalb der ersten gesteuerten Feuchtigkeit und mit einem Luftstrom ausgeführt wird.

10. Verfahren nach Anspruch 9, wobei das Garen Dampfgaren umfasst.

11. Verfahren nach Anspruch 9, wobei:
der erste Temperaturbereich 100 bis 130 Grad Celsius beträgt.

12. Verfahren nach Anspruch 9, wobei:
der zweite Temperaturbereich 120 bis 140 Grad Celsius beträgt, mit einer Luftstromgeschwindigkeit im Bereich von 5-8,5 m/s.

13. Verfahren nach Anspruch 9, wobei:
der dritte Temperaturbereich 160 bis 200 Grad Celsius beträgt, mit einer Luftstromgeschwindigkeit im Bereich von 7-8,5 m/s.

14. Verfahren nach Anspruch 9, wobei das Garen mindestens 6 Minuten lang dauert, der Dehydratisierungsprozess 10 bis 25 Minuten lang dauert und der Bräunungsprozess 5 bis 10 Minuten lang dauert.

15. Verfahren nach Anspruch 9, wobei die Gar-, Dehydratisierungs- und Bräunungsstufe ohne Verzögerung zwischen den Stufen aufeinanderfolgen.

## Revendications

1. Appareil de cuisson pour cuire des frites de pommes de terre, comprenant :
une chambre (10) pour recevoir des frites de pommes de terre crues ;
un système de commande d'humidité ;
un système de génération de flux d'air (22) ;
un système de chauffage (18, 24) ; et
un organe de commande (20) pour commander le système de commande d'humidité, le système de génération de flux d'air, et le système de chauffage,
dans lequel le dispositif de commande est apte à mettre en œuvre un processus de cuisson qui comprend :
un cycle de cuisson à une première température dans une première plage de températures qui est supérieure à 100 degrés Celsius et dans un environnement de cuisson à une première humidité commandée de sorte que les pommes de terre soient cuites jusqu'à leur centre ;
un processus de déshydratation à une deuxième température dans une deuxième plage de températures, dans lequel le processus de déshydratation est effectué dans l'air à une deuxième humidité inférieure à la première humidité commandée avec un flux d'air ; et
un processus de brunissement à une troisième température dans une troisième plage de températures, dans lequel la troisième température est supérieure aux première et deuxième températures, dans lequel le processus de brunissement est effectué dans l'air à une troisième humidité également inférieure à la première humidité commandée et avec un flux d'air.

2. Appareil selon la revendication 1, dans lequel le dispositif de commande (20) est apte à mettre en œuvre le cycle de cuisson en tant que cuisson à la vapeur dans la première plage de températures de 100 à 130 degrés Celsius.

3. Appareil selon la revendication 2, dans lequel la première plage de températures est de 110 à 130 degrés Celsius.

4. Appareil selon la revendication 1, dans lequel le dispositif de commande (20) est apte à mettre en œuvre le processus de déshydratation dans la deuxième plage de températures de 120 à 140 degrés Celsius et avec un débit de flux d'air dans la plage de 5 à 8,5 m/s.

5. Appareil selon la revendication 1, dans lequel le dispositif de commande (20) est apte à mettre en œuvre le processus de brunissement dans la troisième plage de températures de 160 à 200 degrés Celsius et avec un débit de flux d'air dans la plage de 7 à 8,5 m/s.

6. Appareil selon la revendication 1, dans lequel le dispositif de commande (20) est apte à appliquer le processus de déshydratation pendant 10 à 25 minutes.

7. Appareil selon la revendication 1, dans lequel le dispositif de commande (20) est apte à appliquer le processus de brunissement pendant 5 à 10 minutes.

8. Appareil selon la revendication 1, dans lequel le système de commande d'humidité comprend un capteur d'humidité (14), un réservoir d'eau (16) et un chauffe-eau (18), et le système de génération de flux d'air comprend un ventilateur de convection (22).

9. Procédé de cuisson de frites de pommes de terre, comprenant :
la cuisson de frites de pommes de terre crues à une première température dans une première plage de températures qui est supérieure à 100 degrés Celsius et dans un environnement de cuisson à une première humidité commandée de sorte que les pommes de terre soient cuites jusqu'à leur centre ;
la réalisation d'un processus de déshydratation à une deuxième température dans une deuxième plage de températures, et le processus de déshydratation est effectué dans l'air à une deuxième humidité inférieure à la première humidité commandée et avec un flux d'air ; et
le brunissement des frites à une troisième température dans une troisième plage de températures, dans lequel la troisième température est supérieure aux première et deuxième températures, et le processus de brunissement est effectué dans l'air à une troisième humidité également inférieure à la première humidité commandée et avec un flux d'air.

10. Procédé selon la revendication 9, dans lequel la cuisson comprend une cuisson à la vapeur.

11. Procédé selon la revendication 9, dans lequel :
la première plage de températures est de 100 à 130 degrés Celsius.

12. Procédé selon la revendication 9, dans lequel :
la deuxième plage de températures est de 120 à 140 degrés Celsius, avec un débit de flux d'air dans la plage de 5 à 8,5 m/s.

13. Procédé selon la revendication 9, dans lequel :
la troisième plage de températures est de 160 à 200 degrés Celsius, avec un débit de flux d'air dans la plage de 7 à 8,5 m/s.

14. Procédé selon la revendication 9, dans lequel la cuisson dure au moins 6 minutes, le processus de déshydratation dure de 10 à 25 minutes et le processus de brunissement dure de 5 à 10 minutes.

15. Procédé selon la revendication 9, dans lequel les étages de la cuisson, la déshydratation et le brunissement se suivent dans l'ordre sans aucune attente entre les étapes.
